# EUROPEAN PATENT APPLICATION

(11) **EP 4 787 037 A1**
(43) Date of publication of application: **05.08.2026**
(21) Application number: 24869539.7
(22) Date of filing: 10.01.2024
(51) Int. Cl.: G02B 6/42

(54) **OSFP-XD OPTICAL MODULE AND MOUNTING METHOD THEREFOR**

(30) Priority: 28.09.2023 CN 202311292961
(71) Applicant: Wuhan Telecommunication Devices Co., Ltd., Hubei 430074 (CN)
(72) Inventor: LUO, Yaoxin, Wuhan, Hubei 430074 (CN); QUAN, Benqing, Wuhan, Hubei 430074 (CN); LUO, Yong, Wuhan, Hubei 430074 (CN); MA, Weidong, Wuhan, Hubei 430074 (CN); SONG, Beili, Wuhan, Hubei 430074 (CN); ZHOU, Yun, Wuhan, Hubei 430074 (CN); LI, Xinguo, Wuhan, Hubei 430074 (CN)
(74) Representative: Frenkel, Matthias Alexander
(86) International application number: PCT/CN2024/071568
(87) International publication number: WO 2025/065967

(57) **Abstract**

Disclosed are an OSFP-XD optical module and a mounting method therefor. The OSFP-XD optical module comprises a housing base and a heat dissipation member; an upper portion of the housing base is provided with a first mounting groove, in which the heat dissipation member is arranged, and multiple air ducts are arranged on the heat dissipation member along an axial direction of the housing base; at least one airflow groove is formed in the housing base, the airflow groove being opposite the air inlet of one or more of the air ducts, so that external cold air can be drawn into the air duct by means of the airflow groove and used to dissipate heat in the optical module. The OSFP-XD optical module of the present disclosure, provides at least one airflow groove in a housing base, arranges the airflow groove opposite the air inlet of one or more air ducts on a heat dissipation member, and configures the arrangement of the airflow groove, so as to reduce air intake damping in the air ducts of the heat dissipation member, enables heat in the optical module to be smoothly discharged from the optical module.

## Description

### CROSS REFERENCE TO BE RELATED APPLICATIONS

This application claims priority to the following patent application:
(1) Chinese patent application submitted to the Chinese Patent Office on September 28, 2023, with application number 202311292961. X, titled "OSFP-XD OPTICAL MODULE AND MOUNTING METHOD THEREFOR."

### TECHNICAL FIELD

The present disclosure relates to the field of optical communication modules, particularly to an OSFP-XD optical module and a mounting method therefor.

### BACKGROUND

With the rapid development of new services such as intelligent optical network, cloud storage, cloud computing, and the wide application of AI application models such as ERNIE Bot, iFLYTEK Spark, ChatGPT, these applications have increasingly increased the demand for computing support, and also put forward higher requirements for high-speed interconnection within the data center, and the demand for bandwidth and speed has also increased. In order to meet these demands, the Octal Small Form factor eXtra Dense Pluggable module (OSFP-XD) has emerged as a new form of photoelectic module packaging. It supports upgrading the global communication network architecture to 1.6T, providing an ideal solution for the construction of next-generation data centers. This module has the characteristics of high density and miniaturization, which can effectively improve the integration and performance of optical modules; the two main ways to improve the rates of optical modules are to increase the number of channels or increase the rates of a single channel, however, these methods also bring some challenges. As the number of channels and the rate increase, the density of photoelectric assemblies inside the optical module will increase, and the corresponding component power consumption will also increase. These factors can lead to an increase in heat generation inside the optical module. If this heat is not dissipated in a timely manner, the normal operation of the optical module will be directly affected. In order to ensure efficient heat dissipation of the optical module, effective heat dissipation measures need to be taken.

In order to dissipate heat from the optical module, it is usually necessary to mount heat dissipation components inside the optical module and arrange air ducts inside the heat dissipation components to transfer heat out of the optical module through the air ducts inside the heat dissipation components. When mounting heat dissipation components in optical modules, they are usually placed on the module housing and tightly attached to the housing base, in order to dissipate the heat inside the optical module out through heat exchange, thereby reducing the temperature of the optical module. Due to the fact that in existing OSFP-XD optical modules, the number of channels is usually increased by stacking them up and down, to improve the density of the optical module. Due to the up and down stacking arrangement of the adapter, one end of the housing (i.e. the end with the adapter) is higher than the other end, and thus when the heat dissipation component is arranged on the housing, the air inlet of the heat dissipation component will be blocked by one end of the housing, forming a large damping, making it difficult to smoothly transfer the heat inside the optical module to outside the optical module through the air duct arranged by the heat dissipation component. Therefore, improvements are needed to smoothly transfer heat, enhance the performance, stability, and service life of the optical module.

In view of this, how to overcome the shortcomings of existing technologies and solve the above-mentioned technical problems is a difficult issue to be solved in this technical field.

### SUMMARY

The present disclosure provides an optimized solution for an OSFP-XD optical module, aimed at solving the problem in the prior art that due to the upper-lower stacking configuration of the adapters, one end of the housing base is higher than the other end, and when arranging the heat dissipation component, the air inlet of the heat dissipation component is blocked by one end of the housing base, forming a large damping, making it difficult to smoothly transfer the heat inside the optical module out to the outside of the optical module through the air duct arranged by the heat dissipation component.

The present disclosure is implemented as follows:
In the first aspect, the present disclosure provides an OSFP-XD optical module, comprising a housing base 1 and a heat dissipation component 2;
a first mounting groove 11 is provided above the housing base 1, and the heat dissipation component 2 is arranged in the first mounting groove 11, with multiple air ducts 21 arranged on the heat dissipation component 2 along an axial direction of the housing base 1;
The housing base 1 is provided with at least one airflow groove 15, which is arranged opposite to an air inlet of one or more air ducts 21 to draw external cold air into the air duct 21 through the airflow groove 15 for dissipating heat inside the optical module.

Preferably, the OSFP-XD optical module further comprises a cage 3;
One end of the cage 3 is provided with a grille through-hole 31, and with the cage 3 sleeved on the housing base 1, an air outlet of the air duct 21 is connected to the grille through-hole 31, so as to dissipate heat from the optical module through the airflow groove 15, the air duct 21, and the grille through-hole 31.

Preferably, the cage 3 is provided with a second mounting groove 32, in which a heat dissipation frame 321 is provided, and a bottom surface of the heat dissipation frame 321 extends a first predetermined thickness toward an interior of the cage 3, so that the heat dissipation frame 321 is attached to the heat dissipation component 2.

Preferably, a glue overflow groove 111 is provided on a bottom surface of the first mounting groove 11, and the heat dissipation component 2 is attached on the glue overflow groove 111.

Preferably, the optical module further comprises a pull ring 4;
the pull ring 4 comprises a pair of sliding plates 41, on an inner wall of which a first limit protrusion 411 is provided, and the first limit protrusion 411 extends toward an inside of the sliding plate 41;
the housing base 1 comprises a first housing body 13, which comprises two side plates 131, and an outer wall of the side plates 131 is provided with a long groove 1311, one end of which is provided with a sliding groove 13111 along an axial direction of the first housing body 13; and
the sliding plate 41 is arranged in the long groove 1311, so that the first limit protrusion 411 is movably arranged in the sliding groove 13111 to achieve the assembly of the pull ring 4 and the first housing body 13.

Preferably, a tail of the sliding plate 41 is provided with a second limit protrusion 412 vertically upward; and
the housing base 1 further comprises a second housing body 14, which is arranged on the first housing body 13; and a side plate of the second housing body 14 is provided with a first limit groove 141, in which the second limit protrusion 412 is arranged, so as to arrange the second housing body 14 on the first housing body 13 through the sliding plate 41.

Preferably, the optical module further comprises a photoelectric assembly 5, which is arranged inside the first housing body 13, and comprises at least two groups of optical adapters 51; wherein the two groups of optical adapters 51 are arranged in two layers: upper and lower;
a head of the first housing body 13 is provided with a cavity 132, in which a support member 1321 is provided, and at least two groups of bracket inner cavities 13211 are provided on the support member 1321, with the optical adapter 51 provided inside the bracket inner cavity 13211.

Preferably, the tail of the sliding plate 41 is provided with an unlocking protrusion 413 along an axial direction of the sliding plate 41, and the other end of the long groove 1311 is provided with an arc-shaped groove 13112, in which the unlocking protrusion 413 is arranged;
each of two inner walls of the cage 3 are respectively provided with a metal elastic piece, one end of which is connected to the inner wall of the cage 3, and the metal elastic piece is oriented at a predetermined angle to the inner wall of the cage 3;
the cage 3 is sleeved onto an outer side of the housing base 1, so as to lock and unlock the optical module through the metal elastic piece and the unlocking protrusion 413.

In the second aspect, the present disclosure also provides a mounting method for an OSFP-XD optical module, which is applicable to the OSFP-XD optical module of the first aspect, wherein the mounting method comprises:
mounting the heat dissipation component 2 into the first mounting groove 11 of the housing base 1; and
aligning the air inlet of one or more air ducts 21 inside the heat dissipation component 2 with the airflow groove 15, in order to dissipate heat from the optical module through the air ducts 21 and the airflow groove 15.

Preferably, the OSFP-XD optical module further comprises a cage 3, on which a heat dissipation frame 321 is provided, and the mounting method specifically comprises:
mounting the heat dissipation component 2 into the first mounting groove 11 and lifting the heat dissipation frame 321 on the cage 3;
aligning the cage 3 with the housing base 1 to insert the housing base 1 into the cage 3, and tightly attaching the heat dissipation frame 321 to the heat dissipation component 2 to mount the cage 3 and the housing base 1 together.

The above technical solutions adopted by the present disclosure have the following beneficial effects compared to the prior art:
The present disclosure provides at least one airflow groove 15 on the housing base 1 of the OSFP-XD optical module, and positions the airflow groove 15 opposite the air inlet of one or more air ducts 21 on the heat dissipation component 2. By arranging the airflow groove 15, the damping of the air inlet in the air duct of the heat dissipation component 2 is reduced, allowing the heat inside the optical module to be smoothly discharged from the optical module, thereby avoiding the problem of difficult heat dissipation in the optical module caused by the OSFP-XD optical module being stacked vertically.

### BRIEF DESCRIPTION OF THE DRAWINGS

In order to provide a clearer explanation of the embodiments of the present disclosure or the technical solutions in the prior art, the following will briefly introduce the accompanying drawings required for the description of the embodiments or the prior art. It is obvious that the accompanying drawings described below are only some embodiments of the present disclosure. For those skilled in the art, other drawings can be obtained based on these drawings without creative labor.
Figure 1 is a schematic diagram of the overall structure of an OSFP-XD optical module provided in an embodiment of the present disclosure;
Figure 2 is a schematic diagram of the structural components of the connection between the heat dissipation component and the housing base of an OSFP-XD optical module provided in an embodiment of the present disclosure;
Figure 3 is a schematic diagram of the structure of the connection between the cage and the housing base of an OSFP-XD optical module provided in an embodiment of the present disclosure;
Figure 4 is a schematic side diagram of the structure of a cage of an OSFP-XD optical module provided in an embodiment of the present disclosure;
Figure 5 is a schematic structural diagram of a cage of an OSFP-XD optical module provided in an embodiment of the present disclosure;
Figure 6 is a schematic structural diagram of the position of a first mounting groove in an OSFP-XD optical module provided in an embodiment of the present disclosure;
Figure 7 is a cross-sectional view of a fin inside an OSFP-XD optical module provided in an embodiment of the present disclosure;
Figure 8 is a schematic structural diagram of a fin inside an OSFP-XD optical module provided in an embodiment of the present disclosure;
Figure 9 is a schematic structural diagram of a glue overflow groove inside an OSFP-XD optical module provided in an embodiment of the present disclosure;
Figure 10 is a schematic structural diagram of a pull ring inside an OSFP-XD optical module provided in an embodiment of the present disclosure;
Figure 11 is a schematic exploded diagram of an OSFP-XD optical module provided in an embodiment of the present disclosure;
Figure 12 is a schematic structural diagram of a second housing body inside an OSFP-XD optical module provided in an embodiment of the present disclosure;
Figure 13 is a schematic structural diagram of a photoelectric assembly inside an OSFP-XD optical module provided in an embodiment of the present disclosure;
Figure 14 is a schematic diagram of a double-layer stacking structure of an adapter in an OSFP-XD optical module provided in an embodiment of the present disclosure;
Figure 15 is a schematic diagram of the structure of an internal support piece in an OSFP-XD optical module provided in an embodiment of the present disclosure;
Figure 16 is a schematic structural diagram of the position where a rib-shaped protrusion is provided at a bottom of a first housing body in an OSFP-XD optical module according to an embodiment of the present disclosure;
Figure 17 is a flowchart of a mounting method for an OSFP-XD optical module provided in an embodiment of the present disclosure;
Figure 18 is a flowchart of the mounting method of an OSFP-XD optical module in which fin are arranged provided in an embodiment of the present disclosure;
Figure 19 is a schematic diagram of the stacked structure of a first optical transceiver assembly and a second optical transceiver assembly of an OSFP-XD optical module provided in an embodiment of the present disclosure;
Figure 20 is a schematic diagram of the structure in which a first optical transceiver assembly and a second optical transceiver assembly of an OSFP-XD optical module are stacked inside a housing base according to an embodiment of the present disclosure;
Figure 21 shows a schematic structural diagram of a support of an OSFP-XD optical module provided in an embodiment of the present disclosure;
Figure 22 shows a schematic structural diagram of a limit buckle of an OSFP-XD optical module provided in an embodiment of the present disclosure;

### List of the reference numerals

1-Housing base; 11- First mounting groove; 111-Glue overflow groove; 12- Fin; 121-Protrusion; 122-Clamping notch; 13- First housing body; 131-Side panel; 1311- Long groove; 13111-sliding groove; 13112-arc-shaped groove; 132-cavity; 1321- Support member; 13211-Bracket cavity; 14- Second housing body; 141- First limit groove; 15- Airflow groove; 2- Heat dissipation component; 21- Air duct; 3-Cage; 31- Grille through-hole; 32- Second mounting groove; 321- Heat dissipation frame; 4- Pull ring; 41- Sliding plate; 411- First limit protrusion; 412- Second limit protrusion; 413- Unlocking protrusion; 5- Photoelectric assembly; 51 Optical adapter; 6-incision; 7-Limit buckle; 71- Fixing portion; 72-Claw section; 721-Pressing plate; 722-stop plate; 8-First optical transceiver assembly; 81- First optical fiber; 9-Second optical transceiver assembly; 91- Second optical fiber; 10- Buckle.

### SUMMARY

In the description of the present disclosure, the terms "inside", "outside", "longitudinal", "transverse", "up", "down", "top", "bottom", etc. indicate orientation or positional relationships based on the orientation or positional relationships shown in the accompanying drawings, serving only for the convenience of describing the present disclosure and not to require the present disclosure to be constructed and operated in a specific orientation, and therefore should not be understood as limiting the present disclosure.

The following will provide a clear and complete description of the technical solution in the embodiments of the present disclosure in conjunction with the accompanying drawings. Obviously, the described embodiments are only a part of the embodiments of the present disclosure, not all of them. Based on the embodiments of the present disclosure, all other embodiments obtained by ordinary skilled persons in the art without creative labor are within the scope of protection of the present disclosure.

### Embodiment 1

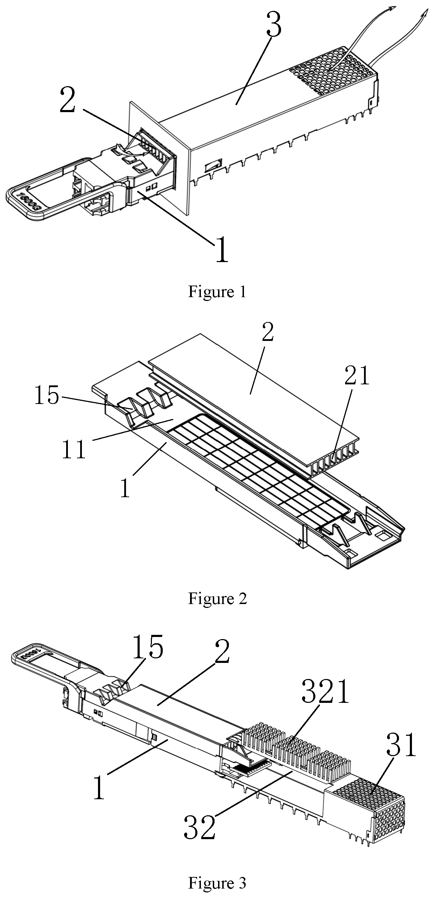

The embodiment of the present disclosure provide an OSFP-XD optical module, as shown in Figures 1-2, comprising a housing base 1 and a heat dissipation component 2.

A first mounting groove 11 is provided above the housing base 1, and the heat dissipation component 2 is arranged in the first mounting groove 11. Multiple air ducts 21 are arranged on the heat dissipation component 2 along an axial direction of the housing base 1.

The housing base 1 is provided with at least one airflow groove 15, which is arranged opposite to the air inlet of one or more air ducts 21 to draw external cold air into the air duct 21 through the airflow groove 15 for dissipating heat of inside the optical module.

As shown in Figures 1-2, the embodiment of the present disclosure comprises a housing base 1 and a heat dissipation component 2. The housing base 1 is provided with a first mounting groove 11, and the heat dissipation component 2 is arranged in the first mounting groove 11 to dissipate heat from the optical module through the heat dissipation component 2. In specific application scenarios, the OSFP-XD optical module of the embodiment of the present disclosure adopts a two-tiered stacking configuration. When using the air duct 21 inside the heat dissipation component 2 for heat dissipation, the stacked design will cause obstruction at the air inlet of the heat dissipation component 2, thereby making the airflow direction of the heat dissipation component 2 not smooth. The embodiment of the present disclosure provides at least one airflow groove 15 on the housing base 1 of the OSFP-XD optical module, and positions the airflow groove 15 opposite to the air inlet of one or more air ducts 21 on the heat dissipation component 2, so that the airflow groove 15 is connected to the air duct 21 inside the heat dissipation component 2, forming a channel for dissipating heat from the OSFP-XD optical module of the embodiment of the present disclosure, thereby ensuring that the OSFP-XD optical module operates under normal working temperature conditions.

In the embodiment of the present disclosure, the first mounting groove 11 is provided on the housing base 1, and the heat dissipation component 2 is arranged in the first mounting groove 11. Specifically, there are baffles (as shown in Figure 2, not labeled in the figure) on both sides above the housing base 1 to form the first mounting groove 11 for mounting the heat dissipation component 2. The heat dissipation component 2 is provided with multiple air ducts 21 along the axial direction of the housing base 1. This embodiment of the present disclosure can, but is not limited to, use aluminum to make the heat dissipation component 2, inside which multiple hollow open cavities are arranged to form the air ducts 21 inside the heat dissipation component 2. During the production process, the heat dissipation component 2 can be made but not limited by laminating, with low precision requirements, low cost, and good thermal conductivity. In addition, in practical applications, the heat dissipation component 2 needs to be in contact with the heat dissipation frame 321 on the cage 3 (as shown in Figure 3). The heat dissipation component 2 is made of aluminum, which has good ductility and can ensure the surface roughness and flatness of the heat dissipation component 2, making it easy for the heat dissipation component 2 to contact the module cage and system heat dissipation component and conduct heat therefrom.

As shown in Figures 3-5, the OSFP-XD optical module according to the embodiment of the present disclosure further comprises a cage 3; one end of the cage 3 is provided with a grille through-hole 31, the cage 3 being sleeved on the housing base 1, and the air outlet of the air duct 21 is connected to the grille through-hole 31, so as to facilitate heat dissipation of the optical module through the airflow groove 15, the air duct 21, and the grille through-hole 31.

As shown in Figure 3, the embodiment of the present disclosure further comprises a cage 3, which is sleeved onto the housing base 1 and mainly used to protect the optical module. In order to further dissipate heat from the optical module, a grille through-hole 31 is provided on one end of the cage 3 in the embodiment of the present disclosure. Specifically, a grille through-hole 31 is arranged at a tail of cage 3. The grille through-hole 31 is connected to the air duct 21 on the heat dissipation component 2 to facilitate heat dissipation of the optical module. It shall be noted that the shape of the grid through holes 31 in the embodiment of the present disclosure can be arranged according to specific situations. For example, the grid through-holes 31 can be arranged as one or more of square, circular, and bar shapes, but are not limited to them.

The OSFP-XD optical module of the present embodiment comprises a housing base 1, a heat dissipation component 2, and a cage 3. An air duct 21 is arranged on the heat dissipation component 2, with the heat dissipation component 2 having the air duct 21 mounted in the first mounting groove 11 of the housing base 1, and a grille through-hole 31 is arranged at one end of cage 3, and is connected to the air duct when the cage 3 is sleeved onto housing base 1, thereby forming a channel for dissipating heat from the optical module.

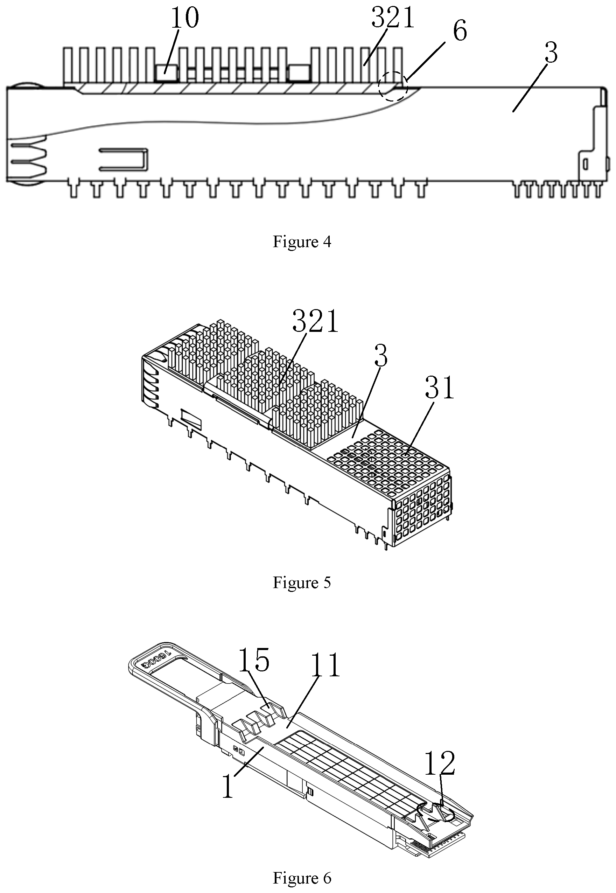

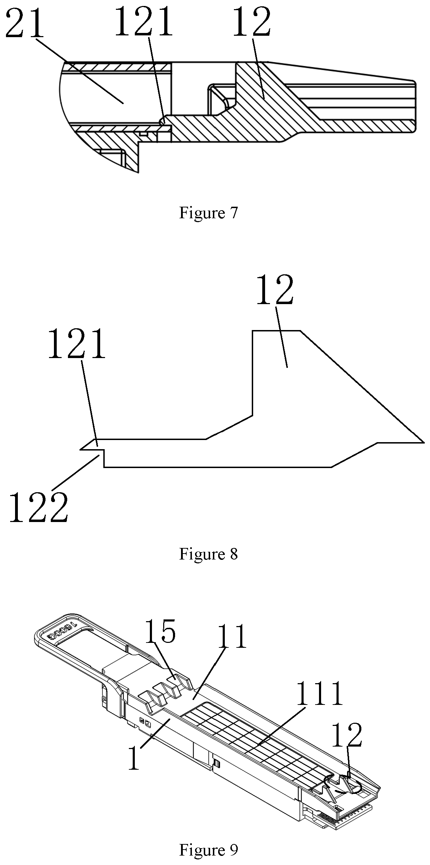

In order to illustrate the complete scheme of the embodiment of the present disclosure, the details of the embodiment of the present disclosure will be described in detail below. In the process of mounting the heat dissipation component 2, in order to fix the heat dissipation component 2 in the first mounting groove 11, as shown in Figures 6-7, at least one fin 12 is provided on an inner wall of one end of the first mounting groove 11 along an axial direction of the housing base 1. One end of the fin 12 is provided with a protrusion 121, which is suspended from one end of the fin 12 to form a clamping notch 122 with a bottom surface of the first mounting groove 11 (as shown in Figure 8). The protrusion 121 is provided in the air duct 21 of the heat dissipation component 2 to clamp and fix the heat dissipation component 2 through the clamping notch 122.

As shown in Figures 6-8, a fin 12 is provided in the first mounting groove 11 of the embodiment of the present disclosure, and one end of the fin 12 is provided with a protruding portion 121. The protruding portion 121 is suspended from the fin 12, and the heat dissipation component 2 is fixed in the first mounting groove 11 through the fin 12 by clamping the protruding portion 121 into the air duct 21 of the heat dissipation component 2. Specifically, a lower end of the fin 12 in the embodiment of the present disclosure is arranged on the first mounting groove 11, and the fin 12 is arranged as a whole along the axial direction of the housing base 1; one end of the fin 12 is provided with a protrusion 121 near the upper side, which is suspended to enable the protrusion 121 and the bottom surface of the first mounting groove 11 to form a clamping notch 122. When the heat dissipation component 2 is mounted in the first mounting groove 11, a port of the air duct 21 of the heat dissipation component 2 is inserted into the protrusion 121 on the fin 12 to fix the heat dissipation component 2 in the first mounting groove 11. It shall be noted that the heat dissipation component 2 of the present embodiment is provided with multiple air ducts 21, and one fin 12 only needs to be clamped with one air duct 21. Through the function of the fin 12, on the one hand, the heat dissipation component 2 is fixed and clamped in the first mounting groove 11. On the other hand, during the mounting process of heat dissipation component 2, the fin 12 can also serve as a positioning tool for positioning the mounting position of heat dissipation component 2.

A cage 3 is provided on the optical module of the embodiment of the present disclosure. In order to further dissipate heat from the optical module of the embodiment of the present disclosure, as shown in Figure 3, the cage 3 of the embodiment of the present disclosure is provided with a second mounting groove 32, and a heat dissipation frame 321 is provided in the second mounting groove 32. A bottom surface of the heat dissipation frame 321 extends a first predetermined thickness inside the cage 3, so that the heat dissipation frame 321 is attached to the heat dissipation member 2.

As shown in Figures 3-4, the embodiment of the present disclosure provides a second mounting groove 32 on the cage 3, and a corresponding heat dissipation frame 321 is disposed in the second mounting groove 32. When the cage 3 is mounted on the housing base 1, the heat dissipation frame 321 is placed on the heat dissipation member 2, and through the synergistic action of the heat dissipation member 2 and the heat dissipation frame 321, internal heat dissipation occurs within the optical module. In order to stably place the heat dissipation frame 321 on the cage 3, the bottom of the heat dissipation frame 321 in this embodiment of the present disclosure is convenient to adopt a cutting method, that is, a cut 6 is made on the edge of the bottom of the heat dissipation frame 321 (see Figure 4). When the heat dissipation frame 321 is mounted in the second mounting groove 32, the cut 6 at the bottom of the heat dissipation frame 321 is clamped into the second mounting groove 32, and under the gravity of the heat dissipation frame 321, the heat dissipation frame 321 will be clamped in the second mounting groove 32.

It shall be noted that in order to fix the heat dissipation frame 321 in the second mounting groove 32, the bottom of the heat dissipation frame 321 in the embodiment of the present disclosure extends a first preset thickness towards the interior of the cage 3. The first preset thickness of the embodiment of the present disclosure can be set to 0.01 mm, but is not limited to it. The direction in which the bottom of the heat dissipation frame 321 extends towards the interior of the cage 3 in the embodiment of the present disclosure is specifically represented as a direction extending from an upper surface of the cage 3 to an inner cavity of the cage 3. By cutting the bottom of the heat dissipation frame 321, the bottom of the heat dissipation frame 321 has the notch 6 (see Figure 4), so that the heat dissipation frame 321 is clamped in the second mounting groove 32. It shall be noted that the bottom of the heat dissipation frame 321 in the embodiment of the present disclosure extends a first preset thickness towards the interior of the cage 3, and the first preset thickness in the embodiment of the present disclosure can be set, but not limited to 0.01mm.

In a preferred application scenario, in order to prevent the heat dissipation frame 321 from falling off from the cage 3, after the heat dissipation frame 321 is mounted in the second mounting groove 32, a buckle 10 (see Figure 4) will be arranged on the cage 3 to fix the heat dissipation frame 321 on the cage 3. In addition, the cage 3 provided with the buckle 10 usually has a certain degree of elasticity. When the cage 3 is inserted into the housing base 1, the heat dissipation frame 321 on the cage 3 is lifted up by the fin 12. The cage 3 has a certain degree of elasticity and the heat dissipation frame 321 is fixed in the second mounting groove 32 of the cage 3 by the buckle 10 provided on the cage 3. When the fin 12 lift up the heat dissipation frame 321, an upper part of the cage 3 could deform within a range of elastic deformation; and when the stroke of the heat dissipation frame 321 completely passes through the fin 12, the fin 12 do not come into contact with the heat dissipation frame 321, and the heat dissipation frame 321 is released from the force exerted by the fin 12. Through the buckle 10 and the elastic action of the cage 3, the heat dissipation frame 321 is firmly attached to the heat dissipation component 2.

In order to improve the heat dissipation effect of the optical module in the embodiment of the present disclosure, the cage 3 of the embodiment of the present disclosure is mounted on the housing base 1 and symmetrically positioned with the housing base 1. After that, the heat dissipation frame 321 needs to be placed on the heat dissipation member 2 and ensure that the heat dissipation frame 321 is tightly adhered to the heat dissipation member 2, so as to transfer the heat inside the optical module to the outside of the optical module as much as possible through heat transfer. Based on this, the size of the cage 3 in the embodiment of the present disclosure cannot be set too large. On the one hand, it is necessary to ensure that after the cage 3 is inserted into the housing base 1, the heat dissipation frame 321 and the heat dissipation component 2 can fit well without any gap between them, so as to achieve excellent heat dissipation. On the other hand, due to the notch 6 provided at the bottom of the heat dissipation frame 321, the bottom of the heat dissipation frame 321 extends towards the interior of the cage 3. During mounting, it is also necessary to ensure that the heat dissipation frame 321 can slide onto the heat dissipation component 2. Based on this, the embodiments of the present disclosure usually set the size of the cage 3 slightly larger than that of the housing base 1, so that cage 3 can be smoothly inserted into the housing base 1. Due to the slightly larger size of the cage 3, during the insertion of the cage 3 into the housing base 1, it is inevitable that the bottom of the heat dissipation frame 321 will scratch the heat dissipation component 2, causing force to be acted on the heat dissipation component 2. During multiple insertions and unlocking of the cage 3 and the housing base 1, it is easy for the heat dissipation component 2 to detach from the first mounting groove 11, resulting in the failure of heat dissipation in the optical module.

In order to solve the above problems, in the embodiment of the present disclosure, the fin 12 are higher than a height of the heat dissipation component 2 by a first preset height (as shown in Figure 7, where the height of the fin 12 is slightly higher than that of the heat dissipation component 2, and the visual difference is not significant). During the mounting and removal of the cage 3, the heat dissipation frame 321 is raised by the fin 12 to avoid the heat dissipation frame 321 from exerting force on the heat dissipation component 2 and causing it to loosen.

The embodiments of the present disclosure use the fin 12 not only to position the heat dissipation component 2, but also to fix the heat dissipation component 2. By set the height of fin 12 to exceed the heat dissipation component 2 by the first preset height, during the mounting of the cage 3, when the heat dissipation frame 321 on the cage 3 passes through the fin 12, the fin 12 lift the heat dissipation frame 321 up, causing it to rise as high as possible and avoid contact with the heat dissipation component 2 as much as possible. Therefore, during the mounting of the heat dissipation frame 321, the heat dissipation component 2 will not be affected by the heat dissipation frame 321, which can prevent the heat dissipation component 2 from loosening due to the force being subjected to the heat dissipation component 2. It shall be noted that the fin 12 of the embodiment of the present disclosure are higher than the heat dissipation component 2 by the first preset height, for example, but not limited to being 0.1mm higher than the heat dissipation component, to avoid the problem of the heat dissipation component 2 being loosened due to the force exerted by the heat dissipation frame 321 on the heat dissipation component 2.

As shown in Figure 9, in order to stably mount the heat dissipation component 2 into the first mounting groove 11, a glue overflow groove 111 is provided on the bottom surface of the first mounting groove 11 in the embodiment of the present disclosure, and the heat dissipation component 2 is attached to the glue overflow groove 111. In a specific application scenario, the embodiment of the present disclosure arranges grid-shaped glue overflow grooves 111 in the first mounting groove 11, wherein the glue overflow grooves 111 of each grid can be drawn on the bottom surface of the first mounting groove 11, for example, but not limited to drawing grids with n × m (where, n≥2, m≥2), and grooves are arranged along edge lines of each grid to form glue overflow grooves 111. The glue overflow grooves 111 are actually formed by connecting the grooves at the edges of each grid with each other. When it is necessary to mount the heat dissipation component 2 into the first mounting groove 11, the glue overflow grooves 111 are filled with solder paste or glue. When the heat dissipation component 2 is assembled into the first mounting groove 11, an inner surface of the heat dissipation component 2 presses the solder paste or glue, causing the solder paste or glue to flow along the glue overflow grooves 111, and the gas in the glue overflow grooves 111 is thus ves, respectively. Sisoldering or high-temperature curing, the heat dissipation component 2 is fixed in the first mounting groove 11 to reduce the risk of damage caused by soldering or high-temperature curing failure caused by the presence of air between the housing base 1 and the heat dissipation component 2, greatly improving the yield of this process.

It shall be noted that when the solder paste fills the gap between the heat dissipation component 2 and the glue overflow groove 111 in the first mounting groove 11 in the embodiment of the present disclosure, the heat dissipation component 2 is attached to the glue overflow groove 111 coated with the solder paste, and the solder paste is melted at high temperature, so that the solder paste flows along the edges of the groove and evenly fills the glue overflow groove 111. After the temperature drops, the heat dissipation component 2 is fixed in the glue overflow groove 111 of the first mounting groove 11 with the solder paste. When the gap between the heat dissipation component 2 of the present embodiment between the glue overflow groove 111 in the first mounting groove 11 is filled with the glue, the heat dissipation component 2 is attached to the glue overflow groove 111 coated with the glue. Through the fluidity of the glue, the glue flows along the edges of the groove. After the glue is evenly filled in the glue overflow groove 111, it is cured by heating, and then the glue fixes the heat dissipation component 2 in the glue overflow groove 111 of the first mounting groove 11.

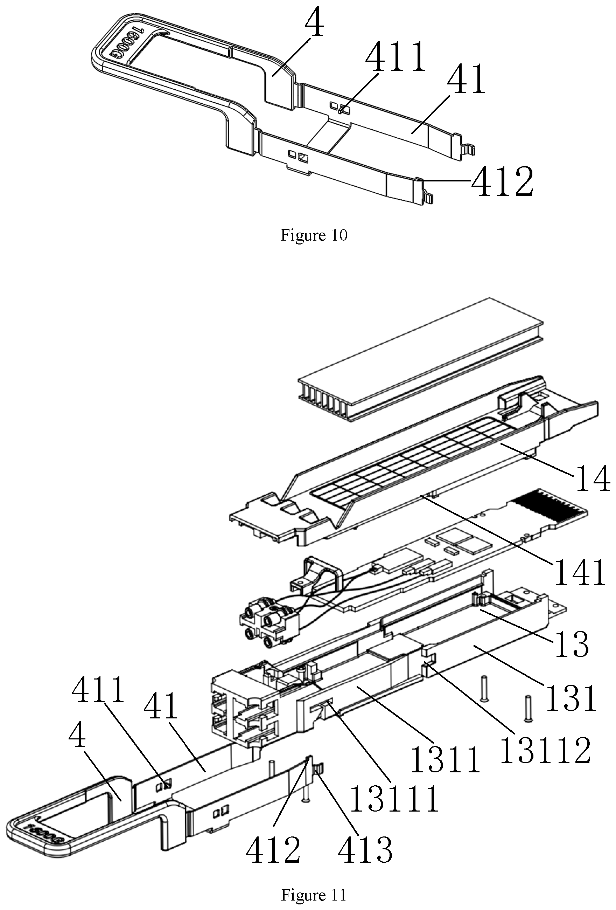

As shown in Figures 10-12, the optical module of the embodiment of the present disclosure further comprises a pull ring 4, wherein the pull ring 4 comprises a pair of sliding plates 41, an inner wall of which is provided with a first limit protrusion 411 extending towards an inside of the sliding plates 41; the housing base 1 comprises a first housing body 13, which includes two side plates 131, and an outer wall of the side plate 131 is provided with a long groove 1311, one end of which is provided with a sliding groove 13111 along an axial direction of the first housing body 13; and the sliding plate 41 is arranged in the long groove 1311, so that the first limit protrusion 411 can be movably arranged in the sliding groove 13111 to achieve the assembly of the pull ring 4 and the first housing body 13.

As shown in Figures 10-12, the pull ring 4 of the embodiment of the present disclosure comprises a pair of sliding plates 41 which are symmetrically arranged, and a first limit protrusion 411 is provided on an inner wall of each movable plate. The first housing body 13 comprises two side plates 131, each side plate 131 having a long groove 1311 in its outer wall, and one end of the long groove 1311 is provided with a sliding groove 13111 along the axial direction of the first housing body 13. When the sliding plate 41 is arranged in the long groove 1311 of the side plate 131, the first limit protrusion 411 is movably arranged in the long groove 1311, thereby connecting the sliding plate 41 with the housing base 1 together. In practical applications, in order to insert the first limit protrusion 411 on the sliding plate 41 into the sliding groove 13111 on the long groove 1311, the present embodiment of the invention may, but is not limited to, arrange a corresponding notch at a lower end of the sliding groove 13111, connect the notch with the lower end of the sliding groove 13111, and then slide the first limit protrusion 411 into the sliding groove 13111 along the notch. Then, the sliding plate 41 is assembled into the long groove 1311 of the side plate 131 to achieve the assembly of the pull ring 4 with the first housing body 13.

As shown in Figures 11-12, a tail of the sliding plate 41 according to the embodiment of the present disclosure is provided with a second limit protrusion 412 vertically upward; the housing base 1 further comprises a second housing body 14, which is arranged on the first housing body 13; the side plate 131 of the first housing body 13 is provided with a first limiting groove 141, and the second limiting protrusion 412 is provided in the first limiting groove 141, so as to arrange the second housing body 14 on the first housing body 13 through the sliding plate 41. It shall be noted that the airflow groove 15 and the first mounting groove 11 described in the previous embodiment of the present disclosure are actually arranged on the second housing body 14 (see Figure 9).

As shown in Figure 11, the tail of the sliding plate 41 in the embodiment of the present disclosure is further provided with a vertically upward second limit protrusion 412. The housing base 1 also comprises a second housing body 14, which is arranged on the first housing body 13. A side plate of the second housing body 14 is provided with a first limit groove 141, which matches the second limit protrusion 412; that is, the first limit groove 141 is also arranged vertically upward. After the sliding plate 41 of the pull ring 4 is connected to the first housing body 13, the second limit protrusion 412 on the sliding plate 41 is inserted into the first limit groove 141 to connect the pull ring 4, the first housing body 13, and the second housing body 14 together.

Furthermore, as shown in Figure 11, the tail of the sliding plate 41 in the embodiment of the present disclosure is provided with an unlocking protrusion 413 along an axial direction of the sliding plate 41. The other end of the long groove 1311 is provided with an arc-shaped groove 13112, and the unlocking protrusion 413 is provided in the arc-shaped groove 13112. The two inner walls of the cage 3 are respectively provided with metal elastic pieces, one end of which is connected to the inner wall of the cage 3, and the metal elastic pieces are oriented at a predetermined angle to the inner wall of the cage 3. The cage 3 is sleeved onto the outer side of the housing base 1, so as to lock and unlock the optical module through the metal elastic pieces and the unlocking protrusion 413.

In order to achieve the reset and unlocking of the optical module in the embodiment of the present disclosure, the tail of the sliding plate 41 in the embodiment of the present disclosure is provided with an unlocking protrusion 413 along the axial direction of the sliding plate 41 (as shown in Figure 11, but not labeled in Figure 11). The unlocking protrusion 413 is arched, and the other end of the long groove 1311 on the first housing body 13 is provided with an arc-shaped groove 13112 (as shown in Figure 11, not labeled in Figure 11) that matches the unlocking protrusion 413. When the sliding plate 41 is mounted on the long groove 1311 of the first housing body 13, the unlocking protrusion 413 of the tail of the sliding plate 41 is pushed into the arc-shaped groove 13112 for fixation. Metal elastic pieces are respectively arranged on the corresponding inner walls of the two sides of the cage 3 (as shown in Figure 1, but not labeled in Figure 1). One end of the metal elastic piece is connected to the inner wall of the cage 3, and the metal elastic piece is oriented at a predetermined angle to the inner wall of the cage 3.

After the unlocking protrusion 413 of the tail of the sliding plate 41 is pushed into the arc-shaped groove 13112 for fixation, the cage 3 is fitted onto the outer side of the housing base 1, and the cage 3 is inserted into the housing base 1. During the insertion process, under the action of the sides of the first housing body 13, the metal elastic piece is in a state of being closely attached to the side of the first housing body 13. When the metal elastic piece reaches the unlocking protrusion 413, it bounces up and is then clamped on the unlocking protrusion 413, thereby locking the pull ring 4, the first housing body 13, and the second housing body 14 through the cage 3.

It shall be noted that in order to lock the pull ring 4, the first housing body 13, and the second housing body 14 through the metal elastic piece on the cage 3, an end of the pull ring 4 in the embodiment of the present disclosure is concave inward, so that when the metal elastic piece on the cage 3 passes through the unlocking protrusion 413, the metal elastic piece can bounce up and is locked in place on the unlocking protrusion 413. When unlocking is required, the sliding plate 41 is pulled to move the first limit protrusion 411 on the sliding plate 41 along the sliding groove 13111, and then the unlocking protrusion 413 is pulled away from the arc-shaped groove 13112. At the same time, when the unlocking protrusion 413 of the pull ring 4 is pulled away from the arc-shaped groove 13112, the unlocking protrusion 413 separates from the metal elastic pieces, and then the pull ring 4 is removed from the inside of the sliding groove 13111, thereby achieving the separation of the pull ring 4, the first housing body 13, and the second housing body 14.

It shall be noted that in order to facilitate the application of force to the pull ring 4, a handle is also provided on the sliding plate 41 of the embodiment of the present disclosure. The pair of sliding plates 41 on the pull ring 4 are respectively arranged on each of the sides of the handle, which can facilitate the user to apply force through the handle, so as to reset and unlock the optical module of the embodiment of the present disclosure.

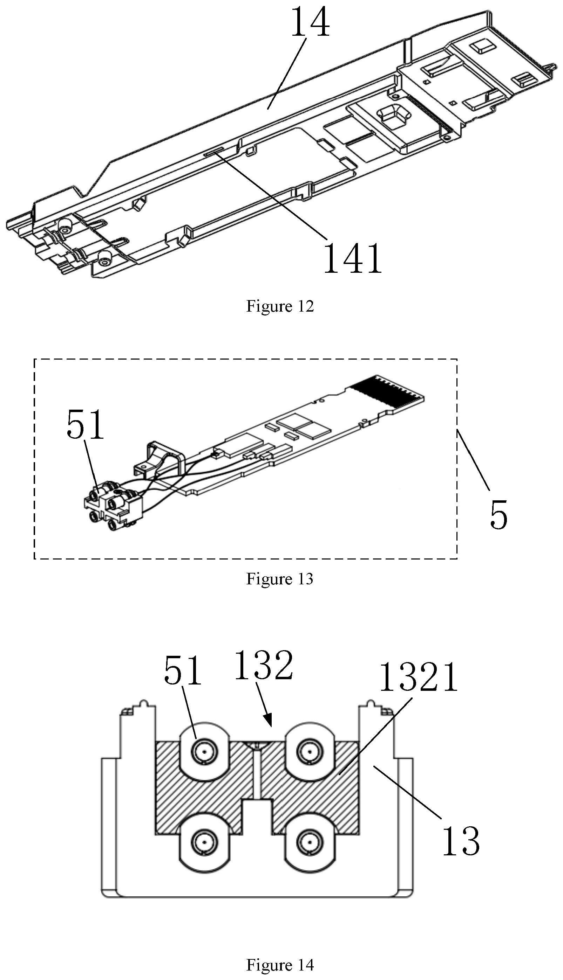

In order to achieve the photoelectric conversion of the optical module in the embodiment of the present disclosure, as shown in Figure 13, the optical module further comprises a photoelectric assembly 5, which is arranged in the first housing body 13 and comprises at least two groups of optical adapters 51, wherein the two groups of optical adapters 51 are arranged in two layers: upper and lower.

A head of the first housing body 13 is provided with a cavity 132, and a support member 1321 is provided inside the cavity 132. At least two groups of bracket inner cavities 13211 are provided on the support member 1321, and the optical adapter 51 is mounted in the bracket inner cavity 13211.

In specific application scenarios, as shown in Figures 13-15, the photoelectric assembly 5 in the optical module of the embodiment of the present disclosure comprises at least two groups of optical adapters 51, and the two groups of optical adapters 51 are arranged in an upper and lower layer configuration. In order to fix the optical adapter 51 arranged in the upper and lower layers in the optical module, the head of the first housing body 13 in the embodiment of the present disclosure is provided with a cavity 132, and a support member 1321 is arranged in the cavity 132. At least two groups of upper and lower bracket inner cavities 13211 are arranged on the support member 1321 to facilitate the placement of the optical adapter 51 in the bracket inner cavity 13211. In specific application scenarios, a positioning ring of the optical adapter is machined into a flat shape on both sides by cutting, and the corresponding bracket inner cavity 13211 of the support member 1321 is arranged on both its sides to match the flat shape on both sides of the positioning ring, so that when the positioning ring of the adapter is inserted into the bracket inner cavity 13211, the flat shape on the positioning ring forms a limit to the two side walls of the bracket inner cavity 13211, preventing the optical adapter 51 from rotating during use or cleaning, which may cause fiber twisting damage. As shown in Figure 14, due to the fact that the optical transceiver assembly comprises an optical transmitting end and an optical receiving end, each set of bracket inner cavities comprises two cavity structures. It can be understood that the two cavity structures located in the upper layer in Figure 14 are a set of bracket inner cavities, and the two cavity structures located in the lower layer are another set of bracket inner cavities. In addition, the photoelectric assembly 5 in the optical module of the embodiment of the present disclosure is mainly used to photoelectric conversion. The photoelectric assembly 5 of the embodiment of the present disclosure comprises at least two optical transceiver assemblies including an optical receiving component and an optical transmitting component, a PCB board, and a DSP chip. The optical transceiver assemblies are connected to the DSP chip through the PCB board to form the photoelectric assembly 5 for photoelectric conversion. After the optical transceiver assembly and the DSP chip are attached on the PCB board, the PCB board needs to be attached in the first housing body 13. In a specific application scenario, a heat dissipation station is arranged in the first housing body 13 to mount the PCB board attached with the optical transceiver assembly and DSP chip inside the first housing body 13.

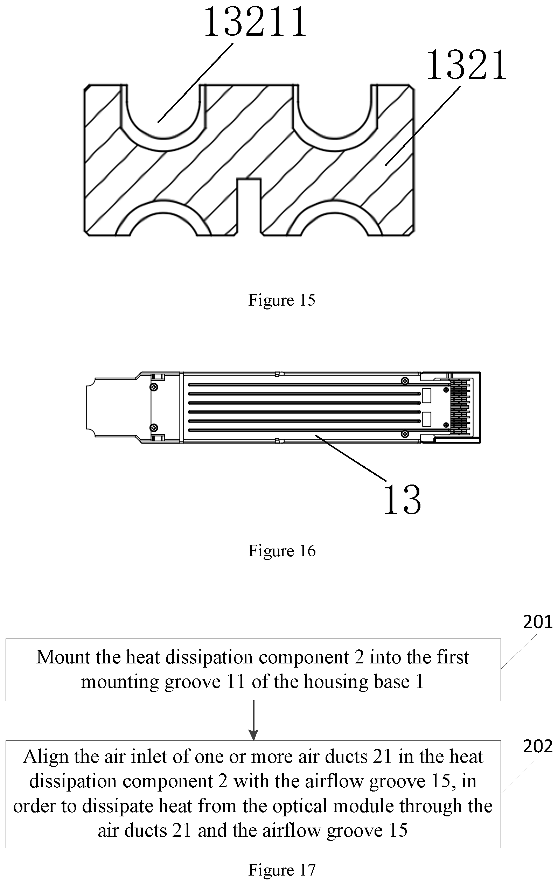

In addition, in order to further dissipate heat inside the housing base 1, multiple rib-shaped protrusions are provided on the lower surface of the first housing body 13 of the embodiment of the present disclosure (as shown in Figure 16, but not labeled in Figure 16), with corresponding intervals between adjacent rib-shaped protrusions. In addition, the cage 3 is provided with grid holes (the shape of the grid holes can be, but is not limited to, circular, square, or long strip). The cage 3 is sleeved onto the housing base 1 and then a bottom heat dissipation duct is formed by the inner wall of the cage 3 cooperating with the rib-shaped protrusions, thereby better dissipating heat inside the optical module. It shall be noted that Figure 16 shows the heat dissipation flow direction of the heat dissipation duct in the embodiment of the present disclosure. By the air duct 21 arranged inside the heat dissipation component 2, and the heat dissipation duct formed by the lower surface of the cage 3 and the rib-shaped protrusions arranged on the lower surface of the first housing body 13 for heat dissipation, thereby transferring the heat inside the optical module to the outside of the optical module.

In addition, due to the stacked arrangement of the optical module in the embodiment of the present disclosure, when using the air duct 21 inside the heat dissipation component 2 for heat dissipation, the stacked design will obstruct the air inlet of the heat dissipation component 2, thereby making the airflow direction of the heat dissipation component 2 not smooth. In order to ensure the smoothness of air intake at the air inlet of the heat dissipation component 2, the present embodiment of the invention provides an airflow groove 15 on the second housing body 14 opposite to the air inlet of the heat dissipation component 2. By arranging the airflow groove 15 at a place obstructing the air inlet of the heat dissipation component 2, the incoming air can smoothly enter the air duct 21 of the heat dissipation component 2, and the heat inside the optical module can be smoothly discharged from the optical module, thereby achieving the purpose of cooling the optical module.

The OSFP-XD optical module of the present embodiment comprises the housing base 1, the heat dissipation component 2, and the cage 3. The air duct 21 is arranged on the heat dissipation component 2 and the heat dissipation component 2 with the air duct 21 is mounted in the first mounting groove 11 of the housing base 1. The grille through-hole 31 is arranged at one end of cage 3. When the cage 3 is fitted onto the housing base 1, the air duct 21 is connected to the grille through-hole 31 to form a channel for dissipating heat from the optical module. In this embodiment of the present disclosure, multiple rib-shaped protrusions are provided at the bottom of the housing base 1 (i.e., the first housing body 13), and there is a gap between adjacent rib-shaped protrusions, whereby when the cage 3 is sleeved onto the housing base 1, another set of heat dissipation ducts is formed between the inner wall of the cage 3 and the rib-shaped protrusions, and the heat generated inside the optical module is discharged through the formed heat dissipation ducts, improving the heat dissipation performance of the optical module. In addition, the bottom surface of the first mounting groove 11 in the embodiment of the present disclosure is provided with the glue overflow groove 111, which mainly performs the functions of overflow and exhaust, so as to avoid failure such as hollowing when the first housing body 13 is fixed to the heat dissipation component 2, and greatly improve the yield of this process. By mounting at least one fin 12 in the first mounting groove 11 and providing the protrusion 121 on one end of the fin 12, which is suspended from one end of the fin 12, the clamping notch 122 is formed by means of the protrusion 121 and the bottom surface of the first mounting groove 11, which can determine the mounting position of the heat dissipation component 2, and can protect the heat dissipation component 2 from falling off. In addition, the height of the fin 12 exceeds the height of the heat dissipation component 2, so that when the cage 3 is fitted onto the housing base 1 and the cage 3 is inserted into the housing base 1, it can avoid the problem of the heat dissipation frame 321 on the cage 3 exerting force on the heat dissipation component 2, which may cause the heat dissipation component 2 to loosen under force.

### Embodiment 2

Embodiment 2 of the present disclosure also proposes a mounting method for an OSFP-XD optical module, which is applicable to the mounting of the OSFP-XD optical module described in the embodiment 1. As shown in Figure 17. The mounting method comprises:
Step 201, mounting the heat dissipation component 2 into the first mounting groove 11 of the housing base 1. At least one airflow groove 15 is provided on the housing base 1 of the OSFP-XD optical module according to the embodiment of the present disclosure. During mounting, the airflow groove 15 needs to be aligned (relatively arranged) with the air inlet of the air duct 21 of the heat dissipation component 2, so that the airflow groove 15 is connected to the air duct 21 inside the heat dissipation component 2, forming a channel for dissipating heat to the OSFP-XD optical module according to the embodiment of the present disclosure, thereby ensuring that the OSFP-XD optical module operates under normal working temperature conditions.
Step 202, aligning the air inlet of one or more air ducts 21 in the heat dissipation component 2 with the airflow groove 15, in order to dissipate heat from the optical module through the air ducts 21 and the airflow groove 15.

The housing base 1 of the OSFP-XD optical module in the embodiment of the present disclosure is provided with the first mounting groove 11, and the glue overflow groove 111 is provided inside the first mounting groove 11. The heat dissipation component 2 is attached to the glue overflow groove 111 of the first mounting groove 11, and by arranging solder paste or glue in the glue overflow groove 111, the heat dissipation component 2 can be firmly mounted in the first mounting groove 11. The mounting of the heat dissipation component 2 and the first mounting groove 11 has been described in detail above, and will not be repeated here.

After mounting the heat dissipation component 2 into the first mounting groove 11, the cage 3 is sleeved onto the housing base 1 to connect the air duct 21 of the heat dissipation component 2 with the grille through-hole on the cage 3. A complete ventilation system is formed through the air duct 21 on the heat dissipation component 2 and the grille through-hole to facilitate heat dissipation of the optical module. It shall be noted that in the actual application process of the embodiment of the present disclosure, after connecting the housing base 1, the cage 3, and the pull ring 4 to form the optical module of the embodiment of the present disclosure, an external fan is usually mounted outside the system of the optical module. The external fan is connected to the grille through-hole 31 on the cage 3, and the air inside the optical module is extracted from the optical module through the external fan. Therefore, the heat generated inside the optical module is extracted from the optical module through the design of the air duct 21 inside the optical module.

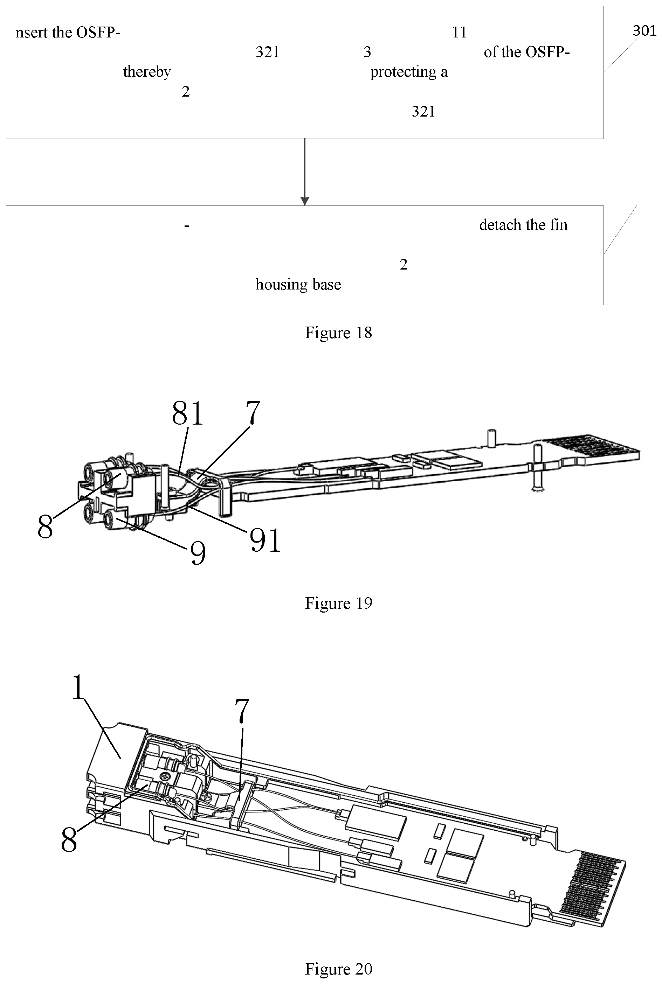

As shown in Figure 18, the OSFP-XD optical module according to the embodiment of the present disclosure further comprises a cage, with a heat dissipation frame provided on the cage, and the mounting method comprises:
Step 301, inserting the OSFP-XD optical module into the first mounting groove 11 of the housing base 1, and lifting the heat dissipation frame 321 on the cage 3 up by the fin 12 of the OSFP-XD optical module, thereby, during the insertion process, protecting an end face of the heat dissipation component 2 from colliding with a corresponding end face of a abutting portion of the heat dissipation frame 321.

In combination with the embodiment 1, the cage 3 of the present disclosure is provided with the heat dissipation frame 321. During the process of inserting the cage 3 into the housing base 1, in order to avoid the heat dissipation frame 321 from exerting force on the heat dissipation component 2 arranged in the first mounting groove 11, causing the heat dissipation component 2 to loosen and thereby causing the heat dissipation component 2 to lose its heat dissipation effect, the optical module of the embodiment of the present disclosure is provided with the fin 12, and the height of the fin 12 is higher than that of the heat dissipation component 2. During the process of inserting the housing base 1 into the cage 3, the heat dissipation frame 321 on the cage 3 is lifted up by the fin 12. In addition, there is the protrusion 121 provided inside the fin 12, which is inserted into the air duct 21 of the heat dissipation component 2. The heat dissipation component 2 is fixed in the first mounting groove 11 through the protrusion 121 of the fin 12, which not only determines the mounting position of the heat dissipation component 2, but also protects it from falling off.

Step 302: After inserting the OSFP-XD optical module into the housing base 1, detaching the fin 12 from the contact with the abutting portion, and abutting the corresponding abutting portion tightly against a surface of the heat dissipation component 2 based on elastic force of the housing base 1.

During the mounting process of the optical module in the embodiment of the present disclosure, it is necessary to sleeve the cage 3 to the housing base 1, and because the height of the fin 12 is higher than that of the heat dissipation component 2, in the mounting process of the cage 3, the heat dissipation frame 321 on the cage 3 is lifted up by the fin 12 to avoid the contact between the heat dissipation frame 321 and the heat dissipation component 2 and avoid the heat dissipation frame 321 exerting force to the heat dissipation component 2, thereby avoiding the heat dissipation component 2 falling off due to the force applied by the heat dissipation frame 321 to the heat dissipation component 2 during the insertion of the cage 3 into the housing base 1 and then effectively avoiding the problem of heat dissipation disorder in the optical module. When the heat dissipation frame 321 passes over the fin 12 as a whole, under the action of gravity, the heat dissipation frame 321 falls down, so that the heat dissipation frame 321 is tightly attached to the heat dissipation component 2, and then the heat dissipation component 2 and the heat dissipation frame 321 work together to dissipate heat from the optical module.

In actual production, the heat dissipation component 2 and the housing base 1 can be welded together through reflow soldering process. When the heat dissipation frame as an assembled module is inserted into the cage as a whole, the fin 12 of the module lift up the heat dissipation frame 321.

### Embodiment 3

On the basis of the embodiment 1, Embodiment 3 of the present disclosure also provides a limit buckle 7, which serves as a small structure in the optical module to confine the optical fibers within the range of the limit buckle. Specifically, as shown in Figures 19-22, the optical module of the embodiment of the present disclosure comprises a first optical transceiver assembly 8 and a second optical transceiver assembly 9. The first optical transceiver assembly 8 is connected to a first optical fiber 81, and the second optical transceiver assembly 9 is connected to a second optical fiber 91. The first optical transceiver assembly 8 and the second optical transceiver assembly 9 both have optical adapters 51, which are arranged on the support member 1321. The optical adapter 51 of the first optical transceiver assembly 8 is connected to the first optical fiber 81, and the optical adapter 51 of the second optical transceiver assembly 9 is connected to the second optical fiber 91.

In combination with the embodiment 1, the support member 1321 is arranged in the housing base 1, and both the first optical transceiver assembly 8 and the second optical transceiver assembly 9 are arranged on the support member 1321. The limit buckle 7 comprises a fixing portion 71 and a claw portion 72. One end of the fixing portion 71 is connected to the claw portion 72, and the fixing portion 71 is connected to the side of the support member 1321 to fix the limit buckle 7 on the support member 1321. The first optical fiber 81 and the second optical fiber 91 are respectively arranged in the claw portion 72 to constrain the first optical fiber 81 and the second optical fiber 91 inside the housing base 1 through the claw portion 72.

Specifically, an upper end of the support member 1321 is provided with an upper mounting groove extending towards a lower surface of the support member 1321, and a lower end of the support member 1321 is provided with a lower mounting groove extending towards the upper surface of the support member 1321. The first optical transceiver assembly 8 is mounted in the upper mounting groove, and the second optical transceiver assembly 9 is mounted in the lower mounting groove. Due to the fact that each optical transceiver assembly (the first optical transceiver assembly 8 and/or the second optical transceiver assembly 9) contains an optical transmitting assembly and an optical receiving assembly, the upper mounting groove of the present embodiment comprises two bracket inner cavities 13211, and the lower mounting groove also comprises two bracket inner cavities 13211.

As shown in Figures 19-22, the multi-channel OSFP-XD optical module of the present disclosure comprises a housing base 1, a support member 1321, and a limit buckle 7. The support member 1321 is designed as a two-layer structure (i.e., an upper mounting groove and a lower mounting groove), with the corresponding first optical transceiver assembly 8 located in the upper mounting groove and the second optical transceiver assembly 9 located in the lower mounting groove to increase the density of the optical module of the present disclosure. The optical module is provided with a limit buckle 7, which comprises a fixing portion 71 and a claw portion 72. The fixing portion 71 is connected to the side of the support member 1321 to fix the limit buckle 7 on the support member 1321. The first optical fiber 81 and the second optical fiber 91 are respectively arranged in the claw portion 72 to constrain the first optical fiber 81 and the second optical fiber 91 in the housing base 1 through the claw portion 72.

The present disclosure involves a high-density optical module, in which a limit buckle 7 is mounted. The first optical fiber 81 and the second optical fiber 91 in the optical module are constrained within the housing base 1 through the claw portion 72 on the limit buckle 7, avoiding fiber pulling at the optical transceiver assemblies (including the first optical transceiver assembly 8 and the second optical transceiver assembly 9), which may cause disorderly fiber distribution and potentially result in fiber breakage during mounting.

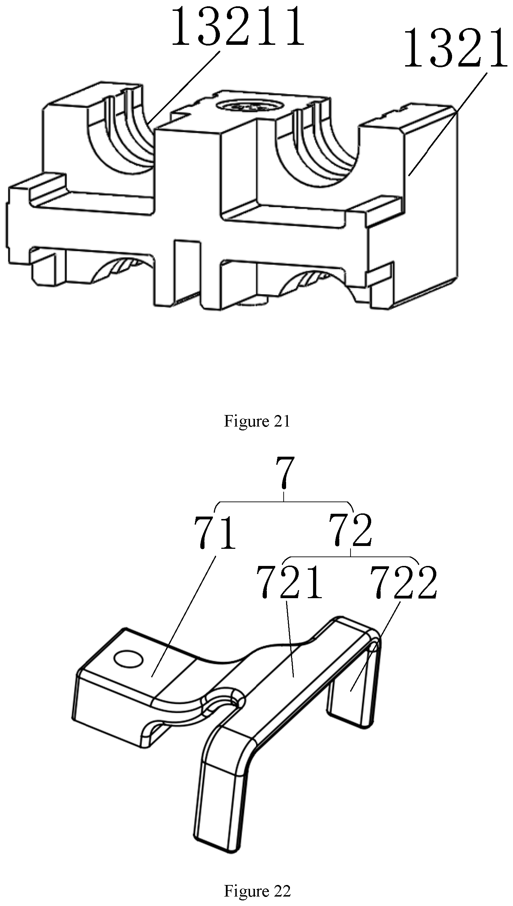

In order to illustrate the complete details of the embodiments of the present disclosure, the details of the embodiments of the present disclosure will be described in detail below. Furthermore, as shown in Figure 22, the claw portion 72 comprises a pressing plate 721 and a stop plate 722. Each of two ends of the pressing plate 721 is respectively connected to the stop plate 722, and the first optical fiber 81 and the second optical fiber 91 are respectively arranged under the pressing plate 721 to be constrained by the stop plates 722 at both ends of the pressing plate 721, so as to gather the first optical fiber 81 and the second optical fiber 91 in the claw portion 72.

As shown in Figure 22, the limit buckle 7 in the embodiment of the present disclosure comprises a fixing portion 71 and a claw portion 72. The claw portion 72 comprises a pressing plate 721 and a stop plate 722. The first optical transceiver assembly 8 and the second optical transceiver assembly 9 of the present embodiment are mounted in the upper and lower mounting grooves, respectively. Since the first optical transceiver assembly 8 is provided in the upper mounting groove, and it is connected to the first optical fiber 81. By pulling the first optical fiber 81 with the first optical transceiver assembly 8, the first optical fiber 81 is usually in the upper layer, and the corresponding second optical transceiver assembly 9 is in the lower mounting groove, so that the second optical fiber 91 is usually in the lower layer. The first optical fiber 81 is pressed to be flush with the second optical fiber 91 by the pressing plate 721 on the claw portion 72, and the first optical fiber 81 and the second optical fiber 91 are constrained by the stop plates 722 on both sides of the pressing plate 721, so that the first optical fiber 81 and the second optical fiber 91 are usually constrained within the range constrained by the pressing plate 721 and the stop plate 722, thereby avoiding fiber pulling at the optical transceiver assemblies (the first optical transceiver assembly 8 and the second optical transceiver assembly 9), and thus avoiding the problem of fiber breakage during mounting.

The above descriptions are only preferred embodiments of the present disclosure and are not intended to limit the present disclosure. Any modifications, equivalent substitutions, improvements, etc. made within the spirit and principles of the present disclosure should be included in the scope of protection of the present disclosure.

## Claims

1. An OSFP-XD optical module, **characterized in** comprising a housing base (1) and a heat dissipation component (2),
wherein a first mounting groove (11) is provided on the housing base (1), and the heat dissipation component (2) is arranged in the first mounting groove (11), with multiple air ducts (21) arranged on the heat dissipation component (2) along an axial direction of the housing base (1); and
at least one airflow groove (15) is provided on the housing base (1), and the airflow groove (15) is arranged opposite to an air inlet of one or more air ducts (21) to draw external cold air into the air ducts (21) through the airflow groove (15) for heat dissipation inside the optical module.

2. The OSFP-XD optical module of claim 1, wherein the OSFP-XD optical module further comprises a cage (3); and
one end of the cage (3) is provided with a grille through-hole (31), with the cage (3) sleeved on the housing base (1), and an air outlet of the air duct (21) is connected to the grille through-hole (31), so as to dissipate heat from the optical module through the airflow groove (15), the air duct (21), and the grille through-hole (31).

3. The OSFP-XD optical module of claim 2, wherein a bottom surface of the housing base (1) is provided with at least two rib-shaped protrusions along the axial direction of the housing base (1), adjacent which are arranged with a predetermined interval, and the cage (3) is sleeved on the housing base (1) to form a heat dissipation duct with a bottom surface of the cage (3) through the rib-shaped protrusions; and
one end of the cage (3) is provided with a grille through-hole (31), and the heat dissipation air duct is connected to the grille through-hole (31) to facilitate heat dissipation of the optical module.

4. The OSFP-XD optical module of claim 2, wherein the cage (3) is provided with a second mounting groove (32), in which a heat dissipation frame (321) is provided, and a bottom surface of the heat dissipation frame (321) extends a first predetermined thickness toward an interior of the cage (3) to enable the heat dissipation frame (321) to attach to the heat dissipation component (2).

5. The OSFP-XD optical module of claim 4, wherein at least one fin (12) is provided on an inner wall of one end of the first mounting groove (11) along the axial direction of the housing base (1), wherein one end of the fin (12) is provided with a protrusion (121), which is suspended from one end of the fin (12) to form a clamping notch (122) by the protrusion (121) and the bottom surface of the first mounting groove (11), and the protrusion (121) is provided in the air duct (21) of the heat dissipation component (2) to fix the heat dissipation component (2) by the clamping notch (122).

6. The OSFP-XD optical module of claim 5, wherein the fin (12) is higher than the heat dissipation component (2) by a first preset height, and during mounting and disassembly of the cage (3), the heat dissipation frame (321) is raised by the fin (12) to avoid the heat dissipation component (2) from loosening due to force applied by the heat dissipation frame (321) to the heat dissipation component (2).

7. The OSFP-XD optical module of claim 1, wherein a glue overflow groove (111) is provided on the bottom surface of the first mounting groove (11), and the heat dissipation component (2) is attached to the glue overflow groove (111).

8. The OSFP-XD optical module of claim 2, wherein the optical module further comprises a pull ring (4);
the pull ring (4) comprises a pair of sliding plates (41), and a first limit protrusion (411) is provided on an inner wall of the sliding plate (41) and extends toward an inside of the sliding plate (41);
the housing base (1) comprises a first housing body (13), and the first housing body (13) comprises two side plates (131), an outer wall of which is provided with a long groove (1311), with one end of the long groove (1311) provided with a sliding groove (13111) along an axial direction of the first housing body (13);
the sliding plate (41) is arranged in the long groove (1311), so that the first limit protrusion (411) is movably arranged in the sliding groove (13111), assembling the pull ring (4) to the first housing body (13).

9. The OSFP-XD optical module of claim 8, wherein the pull ring (4) further comprises a handle, and two sliding plates (41) are respectively arranged on each of the two sides of the handle, so as to apply force to the sliding plates (41) through the handle.

10. The OSFP-XD optical module of claim 8, wherein a tail of the sliding plate (41) is provided with a second limit protrusion (412) vertically upward;
the housing base (1) further comprises a second housing body (14), which is arranged on the first housing body (13); a side plate of the second housing body (14) is provided with a first limit groove (141), and the second limit protrusion (412) is arranged in the first limit groove (141), so as to arrange the second housing body (14) onto the first housing body (13) through the sliding plate (41).

11. The OSFP-XD optical module of claim 9, wherein the optical module further comprises a photoelectric assembly (5), which is arranged in the first housing body (13) and comprises at least two groups of optical adapters (51), wherein the two groups of optical adapters (51) are positioned in a two-tiered configuration;
a head of the first housing body (13) is provided with a cavity (132), and a support member (1321) is disposed in the cavity (132), and provided with at least two groups of bracket inner cavities (13211), with the optical adapter (51) provided in the bracket inner cavity (13211).

12. The OSFP-XD optical module of claim 11, wherein a heat dissipation station is provided inside the first housing body (13), and the photoelectric assembly (5) is arranged on the heat dissipation station to facilitate heat dissipation of the photoelectric assembly (5).

13. The OSFP-XD optical module of claim 8, wherein a tail of the sliding plate (41) is provided with an unlocking protrusion (413) along an axial direction of the sliding plate (41), and the other end of the long groove (1311) is provided with an arc-shaped groove (13112), with the unlocking protrusion (413) provided inside the arc-shaped groove (13112);
each of two inner walls of the cage (3) is respectively provided with a metal elastic piece, one end of which is connected to an inner side wall of the cage (3), and the metal elastic piece is oriented at a predetermined angle to the inner wall of the cage (3);
the cage (3) is sleeved on an outer side of the housing base (1) to lock and unlock the optical module through the metal elastic piece and the unlocking protrusion (413).

14. The OSFP-XD optical module of claim 1, wherein the OSFP-XD optical module further comprises a support member (1321), a limit buckle (7), a first optical transceiver assembly (8), and a second optical transceiver assembly (9), wherein the first optical transceiver assembly (8) is connected to a first optical fiber (81), and the second optical transceiver assembly (9) is connected to a second optical fiber (91);
the support member (1321) is arranged in the housing base (1), and both the first optical transceiver assembly (8) and the second optical transceiver assembly (9) are arranged on the support member (1321);
the limit buckle (7) comprises a fixing portion (71) and a claw portion (72), one end of the fixing portion (71) being connected to the claw portion (72), and the fixing portion (71) is connected to a side of the support member (1321) to fix the limit buckle (7) onto the support member (1321);
the first optical fiber (81) and the second optical fiber (91) are arranged within the claw portion (72) to constrain the first optical fiber (81) and the second optical fiber (91) within the housing base (1) through the claw portion (72).

15. The OSFP-XD optical module of claim 14, wherein the claw portion (72) comprises a pressing plate (721) and stop plates (722);
each of two ends of the pressing plate (721) is respectively connected to one of the stop plates (722), and the first optical fiber (81) and the second optical fiber (91) are respectively arranged under the pressing plate (721) to be constrained by the stop plates (722) at both ends of the pressing plate (721), so as to gather the first optical fiber (81) and the second optical fiber (91) into the claw portion (72).

16. The OSFP-XD optical module of claim 14, wherein an upper end of the support member (1321) is provided with an upper mounting groove extending towards an lower surface of the support member (1321), and a lower end of the support member (1321) is provided with a lower mounting groove extending towards an upper surface of the support member (1321); the first optical transceiver assembly (8) is arranged in the upper mounting groove, and the second optical transceiver assembly (9) is arranged in the lower mounting groove, so that the first optical transceiver assembly (8) and the second optical transceiver assembly (9) are arranged in two-tiered configuration.

17. A mounting method for an OSFP-XD optical module, wherein the mounting method is used for mounting an OSFP-XD optical module according to any one of claims 1-16, and comprises:
mounting the heat dissipation component (2) into the first mounting groove (11) of the housing base (1); and
aligning the air inlet of one or more air ducts (21) in the heat dissipation component (2) with the airflow groove (15) to facilitate heat dissipation of the optical module through the air ducts (21) and the airflow groove (15).

18. The mounting method for an OSFP-XD optical module of claim 17, wherein the OSFP-XD optical module further comprises a cage (3), on which a heat dissipation frame (321) is provided, and an abutting portion that contacts the heat dissipation component (2) is provided on the heat dissipation frame (321) and passes through a slot provided on the cage (3) to abut against a surface of the heat dissipation component (2) of the OSFP-XD optical module mounted in the cage (3), and
the mounting method specifically comprises:
inserting the OSFP-XD optical module into the first mounting groove (11) of the housing base (1), and lifting the heat dissipation frame (321) on the cage (3) by the fin (12) of the OSFP-XD optical module, thereby protecting an end face of the heat dissipation component (2) from colliding with a corresponding end face of the abutting portion of the heat dissipation frame (321) during the insertion process;
after inserting the OSFP-XD optical module into the housing base (1), detaching the fin (12) from contact with the abutting portion, and tightly abutting the corresponding abutting portion against the surface of the heat dissipation component (2) based on elastic force of the housing base (1).
